# EUROPEAN PATENT APPLICATION

(11) **EP 4 835 694 A1**
(43) Date of publication of application: **04.11.2026**
(21) Application number: 24920966.9
(22) Date of filing: 01.02.2024
(51) Int. Cl.: G06F 18/214

(54) **METHOD AND APPARATUS FOR DETERMINING OPTIMAL AI COMBINATIONS, ELECTRONIC DEVICE, AND PROGRAM PRODUCT**

(71) Applicant: Siemens Aktiengesellschaft, 80333 München (DE)
(72) Inventor: PANG, Jian Guo, Shanghai 200082 (CN); CHEN, Wei Gang, Shanghai 200082 (CN); LIU, Zhen, Shanghai 200082 (CN)
(74) Representative: Isarpatent
(86) International application number: PCT/CN2024/075310
(87) International publication number: WO 2025/160903

(57) **Abstract**

Embodiments of the present application mainly relate to the field of power systems, and in particular, to a method and apparatus for determining an optimal AI combination, an electronic device, and a program product. The method includes: acquiring a first group of power data, and determining switching events existing in the first group of power data; dividing the first group of power data into at least two groups of data according to a preset condition; acquiring, based on each of the at least two groups of data, at least one specified feature value corresponding to the switching event, to obtain at least one specified dataset; and performing training by combining each specified dataset of the at least one specified dataset with each training algorithm of a plurality of training algorithms, so as to determine an optimal AI combination corresponding to each of the at least two groups of data, where the optimal AI combination includes a specified dataset and a training algorithm.

## Description

### TECHNICAL FIELD

Embodiments of the present application mainly relate to the field of power systems, and in particular, to a method and apparatus for determining an optimal artificial intelligence (AI) combination, an electronic device, and a program product.

### BACKGROUND

Load monitoring refers to the real-time or periodic monitoring and recording of various loads within a power system in order to acquire information such as electricity consumption, power demand, and energy consumption characteristics of loads. Load monitoring enables users to understand the power consumption behavior of the loads, optimize energy management, improve energy efficiency, and perform load scheduling and capacity planning. Load monitoring can be applied to various scenarios, including residential buildings, commercial buildings, and industrial plants. By understanding the electricity consumption of the loads, users can perform energy management and optimization to achieve objectives such as reducing energy consumption, optimizing load scheduling, and planning device capacity. Some conventional load monitoring methods require sensors or recording devices to be installed on the loads for monitoring purposes. Moreover, improving monitoring accuracy and expanding device coverage typically require additional functions, thereby increasing the complexity of conventional load monitoring methods. However, the incorporation of additional features and more complex implementations inevitably results in increased workflow and costs.

### SUMMARY

Embodiments of the present application provide a method and apparatus for determining an optimal AI combination, an electronic device, and a program product. The optimal AI combination determined in the embodiments of the present application facilitates accurate identification of a related on-site device.

According to a first aspect, a method for determining an optimal AI combination is provided, including: acquiring a first group of power data, and determining switching events existing in the first group of power data; dividing the first group of power data into at least two groups of data according to a preset condition; acquiring, based on each of the at least two groups of data, at least one specified feature value corresponding to the switching event, to obtain at least one specified dataset; and performing training by combining each specified dataset of the at least one specified dataset with each training algorithm of a plurality of training algorithms, so as to determine an optimal AI combination corresponding to each of the at least two groups of data, where the optimal AI combination includes a specified dataset and a training algorithm.

According to a second aspect, an apparatus for determining an optimal AI combination is provided, including: a first acquisition module, configured to: acquire a first group of power data and determine switching events existing in the first group of power data; a grouping module, configured to divide the first group of power data into at least two groups of data according to a preset condition; a second acquisition module, configured to acquire, based on each of the at least two groups of data, at least one specified feature value corresponding to the switching event, so as to obtain at least one specified dataset; and a training module, configured to perform training by combining each specified dataset of the at least one specified dataset with each training algorithm of a plurality of training algorithms, so as to determine an optimal AI combination corresponding to each of the at least two groups of data, where the optimal AI combination includes a specified dataset and a training algorithm.

According to a third aspect, an electronic device is provided, including: at least one memory, configured to store computer-readable code; and at least one processor, configured to invoke the computer-readable code to perform the steps of the method provided in the first aspect.

According to a fourth aspect, a computer storage medium is provided. The computer storage medium stores a computer-readable instruction, and the computer-readable instruction, when executed by a processor, causes the processor to perform the steps of the method provided in the first aspect.

According to a fifth aspect, a computer program product is provided. The computer program product is tangibly stored in a computer-readable medium and includes a computer-executable instruction. The computer-executable instruction, when executed, causes at least one processor to perform the steps of the method according to the first aspect.

### BRIEF DESCRIPTION OF THE DRAWINGS

The following drawings are only intended to provide schematic illustrations and explanations of embodiments of the present application, but are not intended to limit the scope of the embodiments of the present application. In the figures:
FIG. 1 is a schematic diagram of a method for determining an optimal AI combination according to an embodiment of the present application;
FIG. 2 is a schematic diagram of load clustering according to an embodiment of the present application;
FIG. 3 is a schematic diagram of an apparatus for determining an optimal AI combination according to an embodiment of the present application; and
FIG. 4 is a schematic diagram of an electronic device according to an embodiment of this application.

Reference numerals in the drawings are as follows:

| | | | | | |
|---|---|---|---|---|---|
| 100: | Method for determining an optimal AI combination | 101 to 104: | Method steps | 31: | First acquisition module |
| 32: | Grouping module | 33: | Second acquisition module | 34: | Training module |
| 400: | Electronic device | 401: | Processor | 402: | Communications interface |
| 403: | Memory | 404: | Communications bus | 405: | Program |

### DETAILED DESCRIPTION

A subject described in this specification will now be discussed with reference to example implementations. It should be understood that discussion of these implementations are merely intended to make a person skilled in the art better understand and implement the subject described in this specification, and is not intended to limit the protection scope of the claims, the applicability, or examples. The functions and arrangements of the discussed elements may be changed without departing from the protection scope of embodiments of the present application. Various processes or components may be omitted, replaced, or added in the various examples as required. For example, the described method may be executed based on a sequence different from the sequence described herein, and steps may be added, omitted, or combined. In addition, features described in some examples may further be combined in other examples.

As used in this specification, the term "include" and its variants represent open terms, and mean" including but not limited to". The term "based on" means "based at least partially on". The terms "one embodiment" and "an embodiment" mean "at least one embodiment". A term "another embodiment" means "at least one other embodiment". The terms "first", "second", and the like may refer to different or same objects. Another explicit or implicit definition may be included below. Unless otherwise clearly specified in the context, a definition of a term is consistent throughout this specification.

The following describes the embodiments of the present application with reference to the drawings.

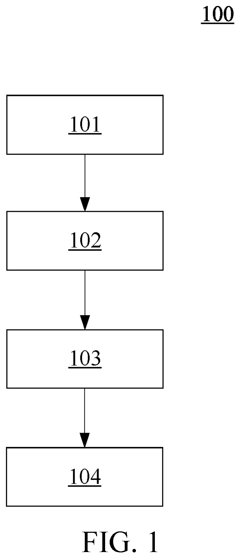

FIG. 1 is a schematic diagram of a method for determining an optimal AI combination according to an embodiment of the present application. As shown in FIG. 1, a method 100 for determining an optimal AI combination includes:
Step 101: Acquire a first group of power data, and determine switching events existing in the first group of power data.
Step 102: Divide the first group of power data into at least two groups of data according to a preset condition.

In the first group of power data, clustering may be performed on the first group of power data according to magnitudes of power values corresponding to the switching events, so as to obtain the at least two groups of data.

Optionally, the preset condition includes: a specified power parameter associated with linear characteristics, nonlinear characteristics, resistive characteristics, inductive characteristics, low-frequency characteristics, or high-frequency characteristics.

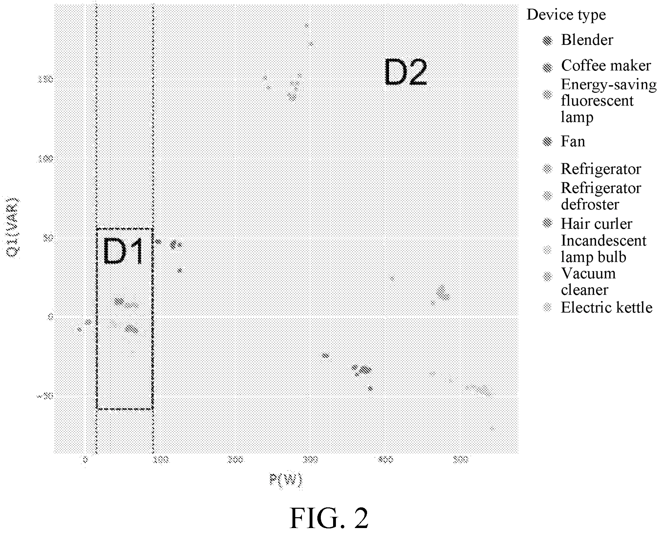

In an embodiment, as shown in FIG. 2, a horizontal axis represents active power P, and a vertical axis represents reactive power Q1. Clustering is performed on the first group of power data according to the magnitudes of the power values corresponding to the existing switching events, to obtain two groups of data. The first group of data D1 includes data corresponding to power values ranging from 15 W to 90 W and is associated with appliances such as fans, refrigerators, and incandescent lamp bulbs. The second group of data D2 includes remaining data and is associated with appliances such as blenders, refrigerator defrosters, vacuum cleaners, electric kettles, and coffee makers.

Step 103: Acquire, based on each of the at least two groups of data, at least one specified feature value corresponding to the switching event, to obtain at least one specified dataset.

Optionally, any one of the at least one specified feature value includes: a single power parameter or a combination of a plurality of power parameters.

In an embodiment, the single power parameter may be, for example, active power P or reactive power Q, and the combination of the plurality of power parameters may be, for example, active power P and reactive power Q, or active power P and current I.

In an embodiment, any one of the at least one specified feature value includes: active power/active power and reactive power/reactive power/active power and current.

Step 104: Perform training by combining each specified dataset of the at least one specified dataset with each training algorithm of a plurality of training algorithms, so as to determine an optimal AI combination corresponding to each of the at least two groups of data, where the optimal AI combination includes a specified dataset and a training algorithm.

The first group of power data includes historical power data labeled with device names and/or corresponding power data acquired in real time.

The plurality of training algorithms include: k-nearest neighbor, Naive Bayes, regression, support vector machines based on a Gaussian radial basis function kernel, latent Dirichlet allocation, quadratic discriminant analysis, decision trees, random forests, and Adaptive Boosting.

In an embodiment, it is assumed that there is a lamp A and an electric kettle B. By default, the lamp A and the electric kettle B are in an off state. In a first time period, the lamp A is first turned on, which is designated as Event 1. Next, the electric kettle B is turned on, which is designated as Event 2. Then, the lamp A is turned off, which is designated as Event 3. Finally, the electric kettle B is turned off, which is designated as Event 4. Specified feature values corresponding to Event 1 to Event 4 within the first time period are used as a training set. The foregoing example is merely illustrative, and a quantity of samples in the training set is far greater than that in this embodiment. Within a second time period, the lamp A is first turned on, which is designated as Event 1. Next, the electric kettle B is turned on, which is designated as Event 2. Then, the lamp A is turned off, which is designated as Event 3. Finally, the electric kettle B is turned off, which is designated as Event 4. Specified feature values corresponding to Event 1 to Event 4 within the second time period are used as a test set.

In the embodiments of the present application, a group of power data is divided into a plurality of groups, and then training is performed on each group to obtain an optimal AI combination. Accordingly, when the corresponding optimal AI combination is used to practically predict a name of a related device, the prediction accuracy can be significantly improved.

In an embodiment, after step 104, power data for a period of time is acquired. Whether a switching event exists is detected. If the switching event exists, a corresponding optimal AI combination is determined, to output a name of a device associated with the switching event during the period of time.

Specifically, a specified feature value corresponding to the switching event is determined. The specified feature value includes an active power value. A corresponding group is determined according to the specified feature value. The corresponding optimal AI combination is determined based on the group. A specified dataset in the optimal AI combination is determined from the power data during the period of time, to obtain a second specified dataset. Then, training is performed by combining the second specified dataset with the training algorithm in the optimal AI combination, and the name of the device associated with the switching event during the period of time is output by the training algorithm.

Optionally, when a difference value of a hop is relatively large, it is determined that a switching event exists. Optionally, the power data for a period of time refers to related field power data within a period of time, which may include current, voltage, active power, reactive power, and the like.

Optionally, the second specified dataset may be directly extracted from the power data, or may be obtained through calculation.

In the embodiments of the present application, the specified feature values corresponding to the existing switching events are determined; the corresponding groups are determined according to the specified feature values; and then the corresponding optimal AI combination is determined. Training is performed based on the optimal AI combination to obtain an algorithm model, and finally the name of the device associated with the existing switching event can be accurately identified. It can be learned that, in the embodiment of the present application, an additional device that may increase installation complexity and costs does not need to be deployed, and collected field data is adaptively switched to a most appropriate load identification path. This is highly practical, as it is effective for devices under both isolated operations and overlapping operations. Furthermore, by incorporating the field data into the training dataset, excellent expandability is achieved. The embodiments of the present application facilitate further load monitoring for different devices.

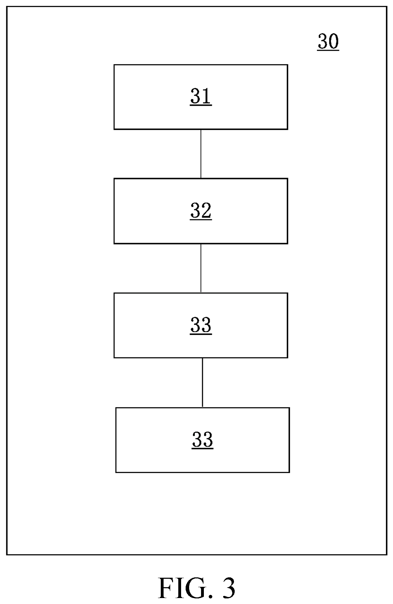

FIG. 3 is a schematic diagram of an apparatus for determining an optimal AI combination according to an embodiment of the present application. As shown in FIG. 3, a device 30 for determining an optimal AI combination includes:
a first acquisition module 31, configured to acquire a first group of power data and determine switching events existing in the first group of power data;
a grouping module 32, configured to divide the first group of power data into at least two groups of data according to a preset condition;
a second acquisition module 33, configured to acquire, based on each of the at least two groups of data, at least one specified feature value corresponding to the switching event, so as to obtain at least one specified dataset; and
a training module 34, configured to perform training by combining each specified dataset of the at least one specified dataset with each training algorithm of a plurality of training algorithms, so as to determine an optimal AI combination corresponding to each of the at least two groups of data, where the optimal AI combination includes a specified dataset and a training algorithm.

The optimal AI combination determined in the embodiments of the present application facilitates accurate identification of a related on-site device.

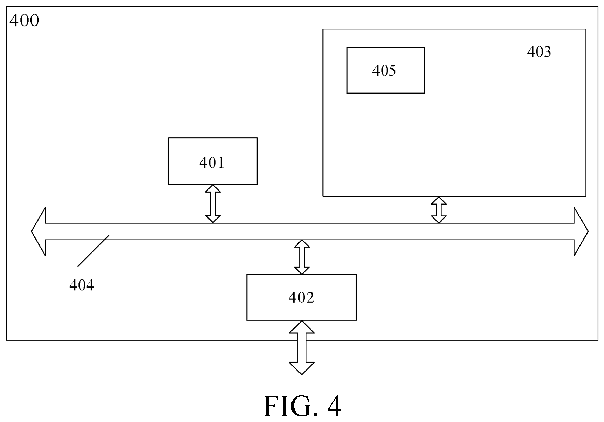

FIG. 4 is a schematic diagram of an electronic device according to an embodiment of the present application. Specific embodiments of the present application do not limit specific implementations of the electronic device. As shown in FIG. 4, the electronic device 400 may include a processor 401, a communications interface 402, a memory 403, and a communications bus 404.

The processor 401, the communications interface 402, and the memory 403 communicate with one another via the communications bus 404.

The communications interface 402 is configured to communicate with another electronic device or server.

The processor 401 is configured to execute a program 405, and specifically perform related steps of any method embodiment in the foregoing plurality of method embodiments.

Specifically, the program 405 may include program code. The program code includes computer operation instructions.

The processor 401 may be a central processing unit (CPU) or an application specific integrated circuit (ASIC), or may be configured as one or more integrated circuits for implementing the embodiments of the present application. One or more processors included in an intelligent device may be a processor of a same type, such as one or more CPUs; or may be processors of different types, such as one or more CPUs and one or more ASICs.

The memory 403 is configured to store the program 405. The memory 403 may include a high-speed random access memory (RAM), or may further include a non-volatile memory, for example, at least one magnetic disk memory.

The program 405 may be specifically configured for causing the processor 401 to perform any method in the plurality of method embodiments among the foregoing embodiments.

For the specific implementation of each step of the program 405, reference may be made to corresponding descriptions of corresponding steps and units in the foregoing embodiments of a generation method for a communications channel, and details are not described herein. It may be clearly understood by a person skilled in the art that, for the purpose of convenient and brief description, for a detailed operating process of the foregoing device and module, reference may be made to the description of a corresponding process in the foregoing method embodiment, and the details are not described herein again.

The present application further provides a computer-readable storage medium, having, stored therein, instructions for causing a machine to perform any method in the plurality of method embodiments as described herein. Specifically, a system or an apparatus equipped with a storage medium may be provided. The storage medium stores software program code for implementing functions of any one of the foregoing embodiments, and enables a computer (or a CPU or an MPU) of the system or the apparatus to read and execute the program code stored in the storage medium.

In this case, the program code read from the storage medium may implement the functions of any one of the foregoing embodiments. Therefore, the program code and the storage medium storing the program code form a part of the present application.

Embodiments of the storage medium for providing program code include a floppy disk, a hard disk, a magneto-optical disk, an optical disc (such as a CD-ROM, a CD-R, a CD-RW, a DVD-ROM, a DVD-RAM, a DVD-RW, or a DVD+RW), a magnetic tape, a non-volatile storage card, and a ROM. Optionally, the program code may be downloaded from a server computer through a communications network.

An embodiment of the present application further provides a computer program product, including a computer instruction. The computer instruction instructs a computing device to perform operations corresponding to any one of the foregoing plurality of method embodiments.

It should be noted that according to implementation needs, each component/step described in the embodiments of the present application may be divided into more components/steps, or two or more components/steps or some operations of the components/steps may be combined into a new component/step, so as to achieve the objectives of the embodiments of the present application.

The method according to the embodiments of the present application may be implemented in hardware and firmware, or implemented as software or computer code that may be stored in a recording medium (e.g., a CDROM, a RAM, a floppy disk, a hard disk, or a magneto-optical disk), or implemented as computer code that is downloaded by using a network, is originally stored in a remote recording medium or a non-transitory machine-readable medium, and is to be stored in a local recording medium. Thus, the method described herein may be processed by such software stored on a recording medium using a general-purpose computer, a special-purpose processor, or programmable or special-purpose hardware (e.g., an ASIC or an FPGA). It may be understood that a computer, a processor, a microprocessor controller, or programmable hardware includes a storage component (e.g., a RAM, a ROM, or a flash memory) that may store or receive software or computer code. When the software or the computer code is accessed and executed by the computer, the processor, or the hardware, the method described herein is implemented. In addition, when a general-purpose computer accesses code for implementing the method herein, the general-purpose computer for executing the code is converted into a special-purpose computer for performing the method herein.

It should be noted that not all steps and modules in the processes and diagrams of the system structures are necessary, and some steps or modules may be omitted according to an actual requirement. An execution sequence of the steps is not fixed and may be adjusted as required. A system structure described in the foregoing embodiments may be a physical structure or a logical structure. To be specific, some modules may be implemented by a same physical entity, or some modules may be implemented by a plurality of physical entities, or may be jointly implemented by some components in a plurality of independent devices.

In the foregoing embodiments, the hardware modules may be implemented mechanically or electrically. For example, a hardware module may include permanently dedicated circuitry or logic (such as a dedicated processor, an FPGA, or an ASIC) to perform the corresponding operation. The hardware module may further include a programmable logic or circuit (for example, a general-purpose processor or another programmable processor), which may be temporarily set by software to complete a corresponding operation. A specific implementation (a mechanical manner, a dedicated permanent circuit, or a temporarily set circuit) may be determined based on costs and time considerations.

The present disclosure is shown and described in detail above by using the drawings and preferred embodiments. However, the present disclosure is not limited to these disclosed embodiments. Based on the foregoing plurality of embodiments, a person skilled in the art may learn that code review means in the foregoing different embodiments may be combined to obtain more embodiments of the present disclosure, and these embodiments also fall within the protection scope of the present disclosure.

The nouns and pronouns related to persons in the present application are not limited to a specific gender.

## Claims

1. A method for determining an optimal AI combination, comprising:
- acquiring (101) a first group of power data, and determining switching events existing in the first group of power data;
- dividing (102) the first group of power data into at least two groups of data according to a preset condition;
- acquiring (103), based on each of the at least two groups of data, at least one specified feature value corresponding to the switching event, to obtain at least one specified dataset; and
- performing training (104) by combining each specified dataset of the at least one specified dataset with each training algorithm of a plurality of training algorithms, so as to determine an optimal AI combination corresponding to each of the at least two groups of data, wherein the optimal AI combination comprises a specified dataset and a training algorithm.

2. The method according to claim 1, wherein the dividing (102) the first group of power data into at least two groups of data according to a preset condition comprises:
- performing clustering on the first group of power data according to magnitudes of power values corresponding to the switching events, so as to obtain the at least two groups of data.

3. The method according to claim 1, wherein the preset condition comprises a specified power parameter associated with linear characteristics, nonlinear characteristics, resistive characteristics, inductive characteristics, low-frequency characteristics, or high-frequency characteristics.

4. The method according to claim 1, wherein after the determining an optimal AI combination corresponding to each of the at least two groups of data, the method further comprises:
- acquiring power data for a period of time;
- detecting whether a switching event exists; and
- if the switching event exists, determining a corresponding optimal AI combination, to output a name of a device associated with the switching event during the period of time.

5. The method according to claim 4, wherein the determining a corresponding optimal AI combination, to output a name of a device associated with the switching event during the period of time comprises:
- determining a specified feature value corresponding to the switching event, wherein the specified feature value comprises an active power value;
- determining a corresponding group according to the specified feature value;
- determining the corresponding optimal AI combination according to the corresponding group;
- determining, from the power data for the period of time, a specified dataset in the optimal AI combination to obtain a second specified dataset; and
- performing training by combining the second specified dataset with the training algorithm in the optimal AI combination, and outputting, by the training algorithm, the name of the device associated with the switching event.

6. The method according to claim 1, wherein any one of the at least one specified feature value comprises: a single power parameter or a combination of a plurality of power parameters.

7. The method according to claim 1, wherein any one of the at least one specified feature value comprises:
- active power/active power and reactive power/reactive power/active power and current.

8. An apparatus for determining an optimal AI combination, comprising:
- a first acquisition module (31), configured to acquire a first group of power data and determine switching events existing in the first group of power data;
- a grouping module (32), configured to divide the first group of power data into at least two groups of data according to a preset condition;
- a second acquisition module (33), configured to acquire, based on each of the at least two groups of data, at least one specified feature value corresponding to the switching event, so as to obtain at least one specified dataset; and
- a training module (34), configured to perform training by combining each specified dataset of the at least one specified dataset with each training algorithm of a plurality of training algorithms, so as to determine an optimal AI combination corresponding to each of the at least two groups of data, wherein the optimal AI combination comprises a specified dataset and a training algorithm.

9. An electronic device (400), comprising: a processor (401), a communications interface (402), a memory (403), and a communications bus (404), wherein the processor (401), the memory (403), and the communications interface (402) communicate with one another via the communications bus (404); and
the memory (403) is configured to store at least one executable instruction, and the executable instruction causes the processor to perform the operations of the method for determining an optimal AI combination according to any one of claims 1-7.

10. A computer storage medium, having a computer program stored therein, wherein the computer program, when executed by a processor, causes the processor to perform the method for determining an optimal AI combination according to any one of claims 1-7.

11. A computer program product tangibly stored in a computer-readable medium and comprising a computer-executable instruction, wherein the computer-executable instruction, when executed, causes at least one processor to perform the method for determining an optimal AI combination according to any one of claims 1-7.
